# EUROPÄISCHE PATENTSCHRIFT

(11) **EP 0 504 643 B1**
(45) Veröffentlichungstag und Bekanntmachung des Hinweises auf die Patenterteilung: **25.06.1997**
(21) Anmeldenummer: 92103510.1
(22) Anmeldetag: 29.02.1992
(51) Int. Cl.: B60H 1/00, B60H 1/32, B60H 1/22, F24F 3/14

(54) **Einrichtung und Verfahren zum Kühlen und/oder Heizen einer Kabine**
Process and apparatus for cooling or heating a cabin
Procédé et installation pour le refroidissement et/ou chauffage d'une cabine

(30) Priorität: 19.03.1991 DE 9112332 U; 06.08.1991 DE 4125993
(43) Veröffentlichungstag der Anmeldung: 23.09.1992
(73) Patentinhaber: Behr GmbH & Co., D-70469 Stuttgart (DE)
(72) Erfinder: Khelifa, Noureddine, Dr., W-8000 München 90 (DE)
(74) Vertreter: Wasmuth, Rolf, Dipl.-Ing.

(56) Entgegenhaltungen:
- EP-A- 0 167 096
- BE-A- 572 293
- DE-A- 3 424 278
- US-A- 2 344 384
- US-A- 2 730 874
- PATENT ABSTRACTS OF JAPAN vol. 8, no. 174 (M-316)(1611) 10. August 1984 & JP-A-59 066 627 (HITACHI) 16. April 1984

## Beschreibung

Die Erfindung betrifft eine Einrichtung zum zeitweisen Heizen oder Kühlen eines Fahrgastraums in einem Kraftfahrzeug und ein Verfahren zum Kühlen oder Heizen mit einer derartigen Einrichtung.

Bei bekannten Kraftfahrzeugen mit einem Verbrennungsmotor steht eine ausreichende abzuführende Wärmemenge zur Verfügung, die auch an kalten Wintertagen eine ausreichende Heizung des Fahrgastraums ermöglicht. Bei Kraftfahrzeugen ohne Verbrennungsmotor, wie z.B. bei Elektrofahrzeugen, Hybridfahrzeugen oder dgl., fällt nur in geringem Umfang Abwärme an, die zum Heizen des Fahrgastraums nicht ausreichend ist. Gleiches gilt für die Klimatisierung eines Fahrgastraums, wenn der Verbrennungsmotor nicht in Betrieb ist.

Zur Kühlung der Antriebskomponenten eines Elektrofahrzeuges sind Kühlkanäle für ein flüssiges Kühlmittel bekannt, über die alle Komponenten mit Wärmeentwicklung durchströmt sind, um aus diesen die Wärmeenergie abzuführen. Da das Temperaturprofil sehr starken Schwankungen unterliegt und, zumindest kurzzeitig, auch größere Wärmemengen abzuführen sind, muß ein in dem Kühlmittelstrom angeordneter Wärmetauscher bezüglich seiner Wärmeübertragungsleistung auf diesen ungünstigsten maximalen Betriebspunkt ausgelegt werden.

Neben der Wärmeabführung aus den Antriebskomponenten ist auch eine Kühlung des Fahrgastraums bei hohen Außentemperaturen und eventuell hoher relativer Luftfeuchte wünschenswert, wobei der Energieaufwand zur Kühlung möglichst gering sein soll und als Kühlmittel umweltverträgliche Stoffe Verwendung finden sollen.

Die US-A 2 344 384 beschreibt eine Klimaanlage für Räume in Gebäuden. Bei dieser Einrichtung wird im Adsorptionsbetrieb dem Raum durch zwei Kanäle Luft entnommen, wobei ein Luftstrom über den Adsorber und dann in die Umgebung abgeleitet wird. Der andere Luftstrom wird über den Regenerator geführt, anschließend geteilt und dieser Teilluftstrom durch den Adsorber geleitet und wieder dem Raum zugeführt. In diesem Fall wird dem Raum kalte, trockene Luft zugeführt, wobei die Luftmenge, die zugeführt wird, wesentlich geringer ist als die abgeführte Luftmenge. Eine Befeuchtungseinrichtung ist bei dieser Betriebsart nicht vorgesehen. Die Anlage arbeitet im kontinuierlichen Betrieb.

Auch bei der Desorption wird dem Raum kalte Luft zugeführt, wobei unmittelbar vor dem Eintritt in den Raum eine Befeuchtungseinrichtung vorgesehen ist. Zwei der drei vorhandenen Ventilatoren sind bezüglich ihrer Luftförderrichtung umkehrbar, so daß der Luftstrom durch den Adsorber und Regenerator reversibel ist. Die dargestellte Heizeinrichtung dient allein zur Aufheizung der Adsorberluft, welche ausgangsseitig des Adsorbers in die Umgebung abgegeben wird. Eine Rückgewinnung der Wärme des aus dem Raum abgeführten Luftstroms erfolgt nicht. Bei dem bekannten Gegenstand ist sowohl bei der Adsorption als auch bei der Desorption der Betrieb isotherm.

In der EP-A 0 167 096 ist eine Klimaanlage mit Speicherheizung für Räume eines Gebäudes beschrieben, die drei Adsorberkolonnen umfaßt. Bei dem damit durchgeführten Verfahren handelt es sich um einen geschlossenen Kreisprozeß. Die Feuchtigkeit wird auskondensiert; die dabei entstehende Temperatur wird durch eine Wärmepumpe auf ein höheres Niveau gebracht und wieder dem Reaktor zugeführt. Zur Desorption wird elektrische Energie benötigt, und es erfolgt eine Wärmerückgewinnung durch Kondensation. Im Kühlfall wird die Desorption mit Hilfe von Sonnenenergie erreicht.

Bezüglich des Heizvorgangs, d.h. zum Aufheizen der Raumluft in der EP-A 0 167 096 ist anzumerken, daß es sich um ein kontinuierliches System handelt, bei dem ohne Frischluftanteil dem Raum warme Luft direkt aus dem Reaktor zugeführt wird. Hierzu erforderlich ist der Betrieb von drei Kolonnen. Auch das Kühlen der Raumluft erfolgt im Drei-Kolonnen-Betrieb, wobei durch Adsorption trockene Luft erzeugt wird. Dieser Vorgang erfolgt isotherm. Bei der bekannten Anordnung muß eine Richtungsänderung des Luftstromes im Reaktor erfolgen. Aufgrund des Kolonnen-Betriebs mit nacheinander beaufschlagbaren Reaktorkolonnen wird bei der bekannten Anordnung gleichzeitig eine Desorption und in einer anderen Kolonne eine Adsorption durchgeführt.

Der Erfindung liegt die Aufgabe zugrunde, eine Einrichtung zum zeitweisen Heizen oder Kühlen eines Fahrgastraums in einem Fahrzeug ohne oder mit nicht in Betrieb befindlichem Verbrennungsmotor anzugeben, mit dem bei geringem Energieverbrauch und unter Verwendung umweltverträglicher Stoffe ein Heizen oder Kühlen möglich ist.

Die Aufgabe wird erfindungsgemäß durch eine Einrichtung mit den Merkmalen des Anspruchs 1 gelöst. Eine derartige Einrichtung mit einem Sorptionsreaktor benötigt während des Heizens oder Kühlens eines Fahrgastraums nur wenig Hilfsenergie. Zeolith ist ein umweltverträglicher Sorbens und ermöglicht einen einfachen, wartungsfreundlichen Aufbau einer Heiz- oder Kühleinrichtung.

Zum Kühlen des Fahrgastraumes wird erfindungsgemäß die Fahrgastraumluft über den Abluftkanal abgezogen, vorzugsweise über einen Luft/Luft-Wärmetauscher und den Zuströmkanal der Reaktionskammer zugeführt. Die aus dem Abströmkanal der Reaktionskammer austretende, entfeuchtete Luft wird in einem ersten Luft/Luft-Wärmetauscher mit Umgebungsluft und in einem zweiten Luft/Luft-Wärmetauscher mit Fahrgastraumabluft gekühlt, in einem Verdunster durch Verdunsten von Wasser bis zur Kühlgrenze adiabatisch weiter abgekühlt und kann dann über den Zuluftkanal unmittelbar in den Fahrgastraum eingeleitet werden.

Soll die erfindungsgemäße Einrichtung zum Heizen benutzt werden, wird über den Zuströmkanal der Reaktionskammer ein feuchter Luftstrom zugeführt, der durch Adsorption im Sorptionsreaktor entfeuchtet wird und dabei Wärme aufnimmt, wobei der aus dem Abströmkanal austretende trockene Warmluftstrom seine Wärmeenergie in einem Luft/Luft-Wärmetauscher an einen Kühlluftstrom abgibt, der als Heizluftstrom dem Fahrgastraum zugeführt ist. Der Kühlluftstrom kann sich in frei wählbaren Anteilen aus Frischluft und Umluft zusammensetzen. Die Abluft aus dem Fahrgastraum strömt durch einen Verdunster, aus dem die feuchte Luft durch einen weiteren Wärmetauscher vorgewärmt zum Sorptionsreaktor strömt.

In Weiterbildung der Erfindung ist zum Abführen von Wärme ein mittels eines weiteren Luftstromsteuerelementes von einem Luftstrom beaufschlagbarer Fortluftkanal vorgesehen. Als Wärmequelle ist ein in einem Kühlkreislauf der Antriebskomponenten befindlicher und von dessen Kühlmittel beaufschlagter Kühler vorgesehen, wobei das Kühlgebläse und der Kühler hintereinander in dem Luftführungskanal angeordnet sind. Strömungsmäßig vor dem Kühler ist ferner ein erstes Luftstromsteuerelement eingebaut, das den Anteil von Umluft und Fortluft steuert.

Strömungsmäßig nach dem Kühler steuert ein zweites Luftstromsteuerelement den Anteil von in den Fahrgastraum eingeleiteter Heizluft und an die Umgebung abgeführter Kühlluft. Der Sorptionsreaktor ist nach dem zweiten Luftstromsteuerelement angeordnet.

Aufgrund der Steuerelemente und des Gebläses ist stets ein ausreichender Kühlluftstrom durch den Kühler bereitgestellt, wohingegen die aus dem Kühler abgeführte Wärmeenergie und auch die im Umluftstrom des Luftführungskanals enthaltene Wärmeenergie lediglich im Bedarfsfall und entsprechend der benötigten Wärmemenge gezielt dem Fahrgastraum zugeführt wird. Außerdem wird die zugeführte Luft entfeuchtet.

An den Kühlkreislauf können weitere Zusatzaggregate mit Wärmeentwicklung angeschlossen sein, wobei für die Umwälzung des Kühlmittels eine Kühlmittelpumpe vorgesehen ist, die von einem Elektromotor angetrieben wird. Um eine optimale Auslegung des Kühlers zu erreichen, ist es zweckmäßig, wenn diesem die Kühlflüssigkeit mit einem relativ konstanten Temperaturniveau zugeleitet wird. Zu diesem Zweck ist vor Eintritt des Kühlmittels in den Kühler ein Wärmespeicher vorgesehen, der die extremen Schwankungen der Wärmeentwicklung in den einzelnen Komponenten kompensiert. Beesonders geeignet ist an dieser Stelle ein Latentwärmespeicher, durch den es möglich ist, nach kurzer Fahrtunterbrechung sofort wieder Wärmeenergie zum Heizen des Fahrgastraumes zur Verfügung zu stellen.

Weitere Merkmale der Erfindung ergeben sich aus den weiteren Ansprüchen, der Beschreibung und der Zeichnung, in der nachfolgend im einzelnen beschriebene Ausführungsbeispiele der Erfindung dargestellt sind. Es zeigen:
- Fig. 1: in schematischer Darstellung eine erfindungsgemäße Einrichtung im Betriebszustand zum Kühlen eines Fahrgastraumes,
- Fig. 2: in schematischer Darstellung eine Einrichtung gemäß Fig. 1 im Betriebszustand zum Heizen eines Fahrgastraumes,
- Fig. 3: in schematischer Darstellung ein weiteres Ausführungsbeispiel einer erfindungsgemäßen Einrichtung im Betriebszustand zum Heizen eines Fahrgastraumes,
- Fig. 4: in schematischer Darstellung die Einrichtung nach Fig. 1 im Betriebszustand Desorbieren,
- Fig. 5: ein weiteres Ausführungsbeispiel einer erfindungsgemäßen Einrichtung zum Heizen eines Fahrgastraumes.

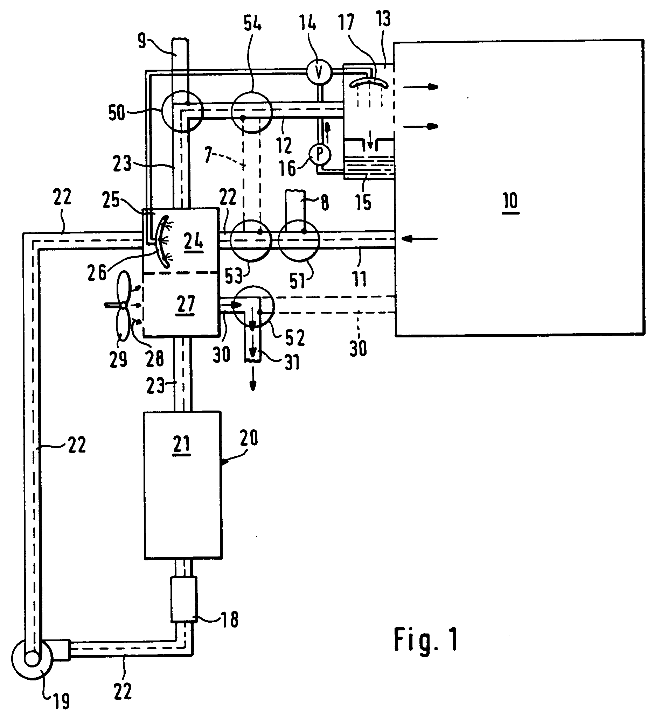

Die in den Fig. 1 bis 4 schematisch dargestellte Einrichtung zum Heizen oder Kühlen eines Fahrgastraumes 10 eines Kraftfahrzeugs weist als Energiespeicher (Wärmequelle) einen Sorptionsreaktor 20 mit einem Sorbens, wie Zeolith oder dgl., auf sowie Luftkanälen, durch die entsprechend dem Betriebszustand mittels Luftstromsteuerelementen Luftströme geführt sind.

Der Reaktionskammer 21 des Sorptionsreaktors 20 ist über einen Zuströmkanal 22 ein Luftstrom zugeführt, der im Kühlbetrieb über einen Abluftkanal 11 und im Heizbetrieb über einen Verdunster 13, den Zuluftkanal 12, das Luftstromsteuerelement 54, den Luftkanal 7 und das Luststromsteuerelement 53 abgesaugt wird. Der Abluftkanal 11 ist mit dem Zuströmkanal 22 über ein Luftstromsteuerelement 51 verbunden, welches in der Stellung 1 eine Strömungsverbindung zwischen dem Zuströmkanal 22 und dem Abluftkanal herstellt und in einer Stellung 2 den Abluftkanal 11 verschließt und den Zuströmkanal 22 mit einem Frischluftkanal 8 verbindet.

Der einen trockenen Warmluftstrom führende Abströmkanal 23 der Reaktionskammer 21 ist im Kühlbetrieb über ein Luftstromsteuerelement 50 mit einem Zuluftkanal 12 des Fahrgastraumes 10 verbunden. In der Stellung 1 tritt der Warmluftstrom aus dem Abströmkanal 23 in den Zuluftkanal 12, während in der Stellung 2 des Luftstromsteuerelementes 50 der Zuluftkanal 12 verschlossen ist und der Abströmkanal 23 in einen Fortluftkanal 9 mündet.

Im Zuluftkanal 12 ist - bevorzugt unmittelbar benachbart zum Fahrgastraum 10 - ein Verdunster 13 angeordnet. Aus einem Wasserspeicher 15 wird mittels einer Pumpe 16 über ein Ventil 14 Wasser geeigneten Oberflächen 17 zur Verdunstung zugeführt.

Der Abströmkanal 23 und der Zuströmkanal 22 stehen in wärmeübertragender Verbindung. Hierzu ist ein Wärmetauscher 24, vorzugsweise ein Kreuzstromwärmetauscher, angeordnet. Vorteilhaft ist im Zuströmkanal 22 ein weiterer Verdunster 25 mit geeigneten Oberflächen 26 angeordnet.

Zwischen dem Sorptionsreaktor 20 und dem Kreuzstromwärmetauscher 24 ist ein wärmeabführender Wärmetauscher 27 angeordnet, der mit dem Wärmetauscher 24 eine Baueinheit bilden kann. Der Wärmetauscher 27 ist von einem Kühlluftstrom 28 durchströmt, welcher von einem Kühlgebläse 29 erzeugt ist. Der aus dem Wärmetauscher 27 austretende Kühlluftstrom ist über einen Verbindungskanal 30 und einen Fortluftkanal 31 in die Atmosphäre abgeführt.

Zur Kühlung des Fahrgastraumes 10 wird über den Abluftkanal 11 Luft abgezogen, welche als Fortluftstrom den Wärmetauscher 24 durchströmt und erwärmt wird. Der Abluftstrom tritt über den Zuströmkanal 22 in den Sorptionsreaktor 20 ein. Das Sorbens, im gezeigten Ausführungsbeispiel Zeolith, adsorbiert die Feuchte, wobei Adsorptionswärme entsteht, die zur Aufheizung der durchströmten Luft führt. Die aus dem Abströmkanal 23 austretende Luft ist somit ein trockener Warmluftstrom, der im Wärmetauscher 27 durch den Kühlluftstrom 28 abgekühlt wird und im Wärmetauscher 24 die Restwärme zur Aufheizung der aus dem Fahrgastraum abgezogenen Abluft abgibt. Über das Steuerelement 50 strömt die abgekühlte, getrocknete Luft in den Zuluftkanal 12 und den Verdunster 13, wo sie unter Verdunsten von Wasser bis zur Kühlgrenze adiabatisch abgekühlt wird. Die abgekühlte Luft tritt aus dem Verdunster vorzugsweise unmittelbar in den Fahrgastraum ein. Durch Trocknung im Sorptionsreaktor, Vorkühlung in den Wärmetauschern und adiabatische Wiederbefeuchtung der Luft kann so der Fahrgastraum gekühlt werden.

Die Luftströmung von dem Fahrgastraum 10 zum Sorptionsreaktor 20 und zurück zum Fahrgastraum wird mittels eines Umluftgebläses 19 aufrechterhalten, welches im Zuströmkanal 22 angeordnet ist. Im Zuströmkanal 22 ist vor Eintritt in die Reaktionskammer 21 ferner eine Heizvorrichtung 18 angeordnet, deren Funktionsweise nachfolgend noch beschrieben wird.

Soll die Einrichtung gemäß Fig. 1 nicht nur zum Kühlen eines Fahrgastraumes 10 verwendet werden, sind gemäß dem gezeigten Ausführungsbeispiel die strichliert gezeichneten Kanäle anzuordnen. Ein Brückenkanal 7 verbindet über Luftstromsteuerelemente 53 und 54 den Zuströmkanal 22 mit dem Zuluftkanal 12. Der Verbindungskanal 30 ist in den Fahrgastraum 10 mündend ausgebildet, wobei der Fortluftkanal 31 über ein Luftstromsteuerelement 52 angeschlossen ist.

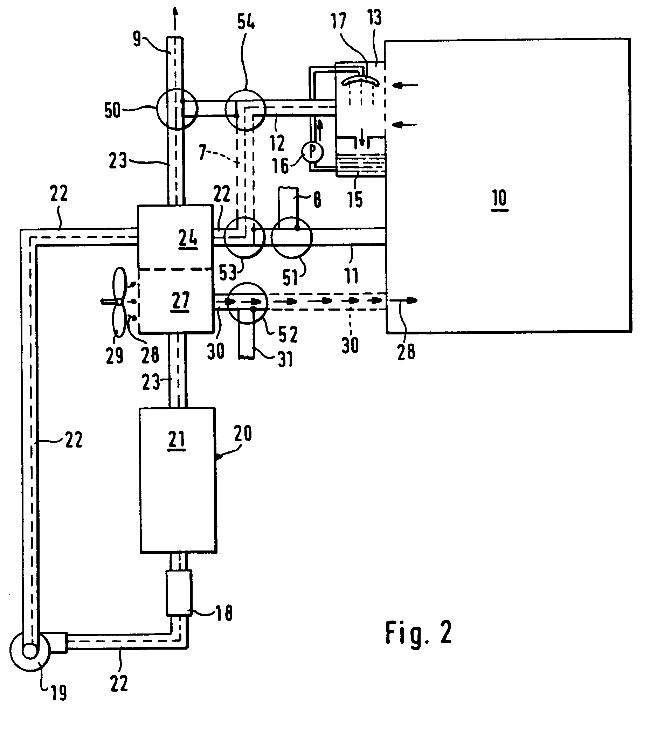

Zum Heizen des Fahrgastraumes 10 werden gemäß Fig. 2 die Luftstromsteuerelemente 50, 52, 53 und 54 in Stellung 2 umgeschaltet, so daß deren Klappen den Brückenkanal 7 bzw. den Verbindungskanal 30 öffnen.

In diesem Fall wird über den Zuluftkanal 12 aus dem Fahrgastraum 10 warme Abluft angesaugt, die vorzugsweise im Verdunster 13 bis zur Sättigung Wasser aufnimmt. Über den Zuluftkanal 12 und das Steuerelement 54 tritt die Fortluft über den Brückenkanal 7 und das Steuerelement 53 in den Zuströmkanal 22 ein und durchströmt - wie in Fig. 1 beschrieben - die Reaktionskammer 21 des Sorptionsreaktors 20. Die über den Abströmkanal 23 austretende Warmluft gibt ihre Wärme im Wärmetauscher 27 an den Kühlluftstrom 28 ab, der vom Kühlgebläse 29 erzeugt ist. Der Kühlluftstrom setzt sich aus Frischluft und Umluft zusammen, wobei die Umluft über das Luftstromsteuerelement 60 und den Luftkanal 32 aus dem Fahrgastraum mittels Gebläse 29 abgesaugt wird. Der Kühlluftstrom 28 tritt als Heizluft über den Verbindungskanal 30 in den Fahrgastraum 10 ein. Die abgekühlte Luft tritt über den Fortluftkanal 9 in die Atmosphäre aus.

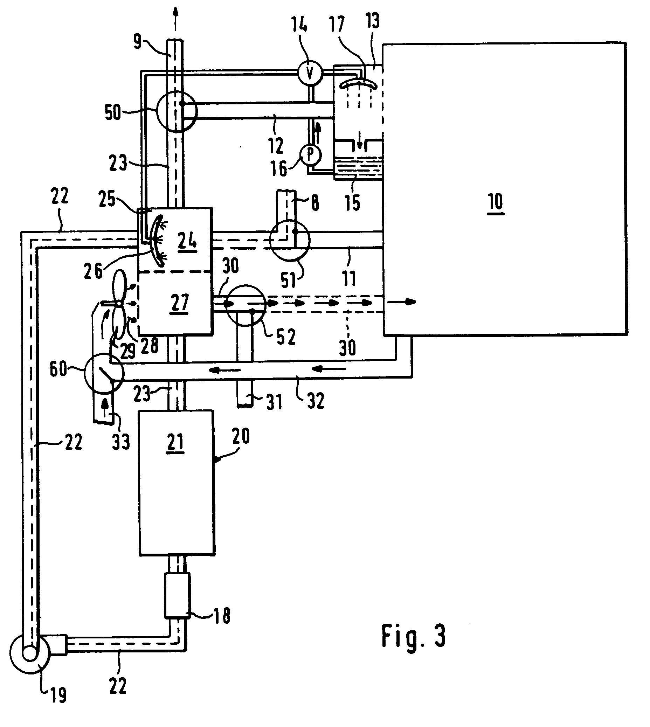

Alternativ kann die Einrichtung auch zum Heizen gemäß der Darstellung in Fig. 3 benutzt werden. Über den Frischluftkanal 8 und das in Stellung 2 stehende Luftstromsteuerelement 51 wird Frischluft dem Zuströmkanal 22 zugeführt. Diese Frischluft wird im Kreuzstromwärmetauscher 24 angewärmt und über den Verdunster 25 bis zur Sättigung befeuchtet. Die angewärmte, befeuchtete Frischluft strömt in die Reaktionskammer 21 des Sorptionsreaktors 20 ein und tritt als trockener Warmluftstrom durch den Abströmkanal 23 aus, der über das in Stellung 2 stehende Luftstromsteuerelement 50 mit dem Fortluftkanal 9 verbunden ist. Über den Wärmetauscher 27 wird die aus dem Sorptionsreaktor 20 abgeführte Adsorptionswärme an den Kühlluftstrom 28 abgegeben, welcher als Heizluft über den Verbindungskanal 30 in den Fahrgastraum 10 eintritt.

Das Kühlgebläse 29 saugt über einen Umluftkanal 32 Kabinenluft an, wobei über ein Regelorgan 60 aus einem Frischluftkanal 33 gleichzeitig Frischluft angesaugt wird. Je nach den Betriebsbedingungen kann der angesaugten Luft ein entsprechender Anteil Frischluft zugeführt werden, wobei dieser Mischluftstrom als Kühlluftstrom den Wärmetauscher 27 durchströmt und als Heizluft in den Fahrgastraum 10 eintritt.

Bei der Ausführung gemäß Fig. 3 kann der in den Fig. 1 und 2 strichliert dargestellte Brückenkanal 7 entfallen.

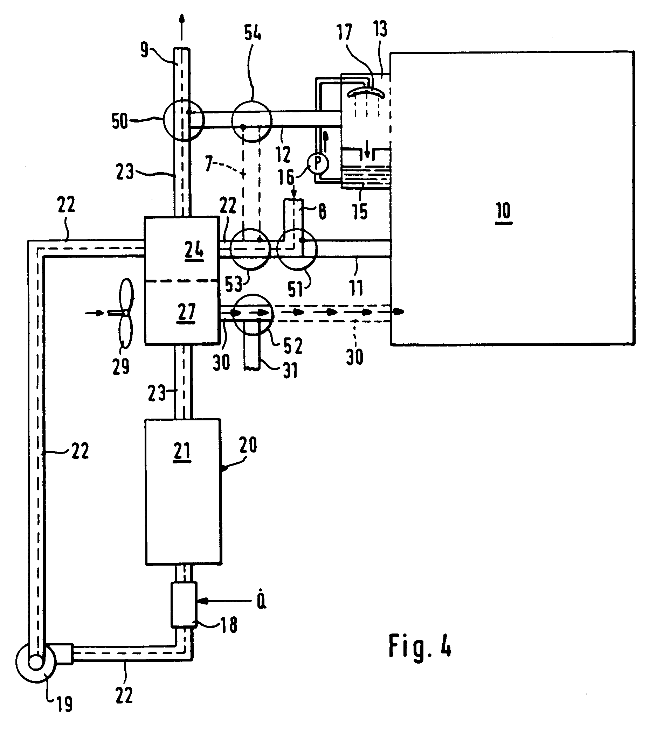

Hat der Sorptionsreaktor eine bestimmte Wassermenge aufgenommen, muß zur Regeneration desorbiert werden. Hierzu wird, wie in Fig. 4 dargestellt, über den Frischluftkanal 8 dem Zuströmkanal 22 Frischluft zugeführt, welche vor Eintritt in die Reaktionskammer 21 in der Heizvorrichtung 18 aufgeheizt wird. Als Heizvorrichtung 18 kann ein elektrisches Heizregister verwendet werden, welches zum Beispiel beim Aufladen der Akkumulatoren eines Elektrofahrzeugs in Betrieb ist; bei einem Fahrzeug mit Verbrennungsmotor kann die notwendige Wärmeenergie dem Abgas über einen Wärmetauscher entnommen werden. Die aufgeheizte Frischluft nimmt Wasser aus dem Sorbens auf und führt dieses über den Abströmkanal 23 und den Wärmetauscher 24 sowie den Fortluftkanal 9 ab. Im Wärmetauscher 24 gibt die feuchte, warme Luft aus dem Sorptionsreaktor Wärme an die Frischluft ab, wodurch ein Teil der Abwärme zurückgewonnen wird. Das Ende des Desorptionsvorgangs kann anhand eines Anstiegs der Temperatur im Abströmkanal 23 festgestellt werden. Vorteilhaft kann der Temperaturanstieg am Ende des Desorptionsvorgangs zum Heizen des Fahrgastraumes 10 ausgenutzt werden, wozu das Kühlgebläse 29 einzuschalten ist und der Kühlluftstrom als Heizluft über den Verbindungskanal 30 dem Fahrgastraum zugeführt werden kann.

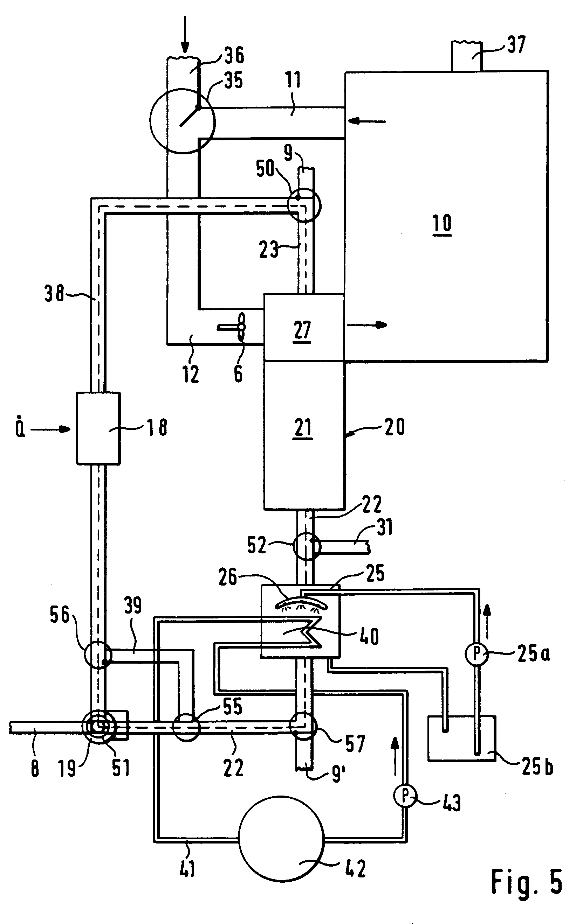

Das Ausführungsbeispiel der erfindungsgemäßen Einrichtung gemäß Fig. 5 dient ausschließlich der Heizung eines Fahrgastraums 10, beispielsweise eines Elektrofahrzeugs. Hierbei wird in einem Luftstromsteuerelement 35 über den Abluftkanal 11 Abluft und über den Kanal 36 Frischluft angesaugt und über den Zuluftkanal 12 in den Fahrgastraum 10 geblasen. Ein dem Frischluftanteil entsprechender Fortluftanteil wird über den Fortluftstutzen 37 an die Umgebung abgegeben. Ein im Zuluftkanal 12 angeordnetes Gebläse 6 stellt eine ausreichende Luftumwälzung sicher.

Wie bereits zu den vorhergehenden Ausführungsbeispielen nach den Fig. 1 bis 4 beschrieben, ist im Zuluftkanal 12 ein Wärmetauscher 27, vorzugsweise ein Kreuzstromwärmetauscher, angeordnet, durch den die trockene Warmluft geführt ist und die aufgenommene Adsorptionswärme an den Umluftstrom abgibt.

Der Zuströmkanal 22 zur Reaktionskammer 21 des Sorptionsreaktors 20 ist über einen Umluftkanal 38 mit dem Abströmkanal 23 verbunden. Die Luftzirkulation in dem so gebildeten, geschlossenen Kreislauf wird durch das Umluftgebläse 19 aufrechterhalten. Die trockene, durch die Wärmeabgabe im Wärmetauscher 27 abgekühlte Umluft des Sorptionsreaktors wird vor Wiedereintritt in die Reaktionskammer 21 in dem Verdunster 25 bis zur Sättigungsgrenze befeuchtet. Der Verdunster weist einen von einer Pumpe 25a betriebenen Wasserkreislauf auf, der permanent aus einem Wasserreservoir 25b Wasser auf geeignete Oberflächen 26 zur Verdunstung aufbringt. Vorteilhaft ist im Verdunster 25 ein Wärmetauscher 40 eines Kühlkreislaufs 41 integriert, der eventuell vorhandene Abwärme aus beliebigen Aggregaten abführt. Die wärmeaufnehmende Seite des durch die Pumpe 43 betriebenen Kühlkreislaufs ist durch einen Kreis 42 stilisiert dargestellt.

Über das Luftstromsteuerelement 50 ist der Abströmkanal 23 wahlweise mit dem Fortluftkanal 9 oder dem Umluftkanal 38 verbindbar, während über das im Gebläse integrierte Luftstromsteuerelement 51 der Frischluftkanal 8 oder der Umluftkanal 38 wahlweise mit dem Zuströmkanal 22 verbindbar ist.

Ist eine Heizung des Fahrgastraumes 10 nicht notwendig, muß dennoch die aufgenommene Wärme des Kühlkreislaufs 41 abgeführt werden. In der Klappenstellung 2 des Luftstromsteuerelementes 51 saugt das Kühlluftgebläse 19 Frischluft über den Frischluftkanal 8 an, welche über einen Fortluftkanal 31 abgeblasen werden kann, der über das in Stellung 1 liegende Luftstromsteuerelement 52 zwischen dem Verdunster 25 und dem Sorptionsreaktor 20 abzweigt.

Muß der wärmespeichernde Sorptionsreaktor 20 desorbiert werden, kann dies - wie zu Fig. 4 beschrieben - durch Öffnen des Frischluftkanals sowie des Fortluftkanals unter Hinzufügung von Wärmeenergie erfolgen. Vorzugsweise ist vorgesehen, zwischen dem Zuströmkanal 22 und dem Umluftkanal 38 ein das Gebläse 19 umgehenden Bypasskanal 39 anzuordnen, der über Luftstromsteuerelemente 55 und 56 an die genannten Kanäle anschließt. In der Stellung 1 der Luftstromsteuerelemente 55 und 56 ist der Bypasskanal 39 geschlossen; in der Stellung 2 der Luftstromsteuerelemente 51, 55 und 56 wird aus dem Frischluftkanal 8 Luft angesaugt und über den Bypasskanal 39 unmittelbar vom Gebläse 19 in den Umluftkanal 38 gespeist, so daß unter Umkehrung der bisherigen Strömungsrichtung die unter Zuführung der Wärmeenergie Q aufgeheizte Frischluft über den Abströmkanal 23 in die Reaktionskammer 21 einströmt. Zur Abfuhr dieser Wasser austragenden Luft muß am Zuströmkanal 22 ein Fortluftstutzen 9' angeordnet werden, dessen Luftstromsteuerelement 57 in Stellung 2 ein Abströmen der zugeführten Frischluft in der Desorptionsphase gewährleistet.

Mit der Heizeinrichtung gemäß Fig. 5 ist auch bei einem Elektrofahrzeug, einem Hybridfahrzeug oder einem anderen ohne Verbrennungsmotor ausgeführten Fahrzeug wie auch im Falle einer Standklimatisierung über einen begrenzten Zeitraum eine ausreichende Heizung des Fahrgastraumes möglich. Die bei einem verbrennungsmotorlosen Fahrzeug abzuführenden geringen Wärmemengen können vorteilhaft zur Anreicherung der dem Sorptionsreaktor 20 zugeführten Reaktionsluft mit Wasser ausgenutzt werden.

Wird das Fahrzeug bei Außentemperaturen betrieben, die eine Heizung des Fahrgastraums 10 nicht erforderlich machen, so wird der zur Wärmeaufnahme im Kühler 40 erforderliche Luftstrom, der durch das Umluftgebläse 19 erzeugt wird, mindestens annähernd vollständig durch den Frischluftkanal 8 angesaugt und durch den Kühler zu dem zweiten Luftstromsteuerelement 52 geblasen. Wenn kein Heizungsbedarf für den Fahrgastraum 10 besteht, befindet sich das zweite Luftstromsteuerelement 52 in einer Stellung, die das gesamte durch den Kühler 40 geblasene Luftvolumen durch den Fortluftkanal 31 ins Freie ableitet.

In den gezeigten Ausführungsbeispielen sind die Luftstromsteuerelemente in sperrender Stellung oder Durchgangsstellung dargestellt. Je nach gewünschter Temperatur des Kühlluftstromes und der Heizungsluft ist eine Regelung durch eine Vielzahl von Zwischenstellungen dieser Luftstromsteuerelemente möglich.

## Patentansprüche

1. Einrichtung zum zeitweisen Heizen oder Kühlen des Fahrgastraums (10) eines Kraftfahrzeugs mit einer Wärmequelle (18, 40), deren Wärmeenergie auf einen durch ein Umluftgebläse (19) erzeugten Luftstrom übertragbar ist, und mit folgenden Merkmalen:
- der Wärmequelle (18, 40) ist im Luftstrom ein Sorptionsreaktor mit Zeolith oder dergleichen als Sorbens nachgeschaltet;
- an den Zuströmkanal (22, 23) zwischen Umluftgebläse (19) und Reaktionskammer (21) des Sorptionsreaktors (20) ist durch ein erstes Luftstromsteuerelement (51) ein Frischluftkanal (8) verbindbar;
- an den Abströmkanal (22, 23) der Reaktionskammer (21) des Sorptionsreaktors (20) ist durch ein zweites Luftstromsteuerelement (50, 57) ein in die Atmosphäre mündender Fortluftkanal (9) verbindbar;
- ein luftbefeuchtender Verdunster (13, 25) ist dem Sorptionsreaktor (20) in dessen Luftstrom vorschaltbar;
- ein einerseits mit einem Kühlluftgebläse (6, 29) verbundener Wärmetauscher (27) ist andererseits neben dem Sorptionsreaktor (20) in dessen Luftstrom eingeschaltet;
- der einerseits mit dem Kühlluftgebläse (6, 29) verbundene Wärmetauscher (27) steht mit dem Fahrgastraum (10) über einen den durch das Kühlgebläse erzeugten Luftstrom leitenden Verbindungskanal (30) in Verbindung.

2. Einrichtung nach Anspruch 1,
dadurch gekennzeichnet, daß zum Abführen von Wärme ein mittels eines weiteren Luftstromsteuerelementes (52) von einem Luftstrom beaufschlagbarer Fortluftkanal (31) vorgesehen ist.

3. Einrichtung nach Anspruch 1,
dadurch gekennzeichnet, daß zum Kühlen des Fahrgastraums (10) der Abströmkanal (23) über das Luftstromsteuerelement (50) wahlweise mit einem Zuluftkanal (12) verbindbar ist, in dem ein Verdunster (13) angeordnet ist.

4. Einrichtung nach einem der vorhergehenden Ansprüche, dadurch gekennzeichnet, daß zum Kühlen des Fahrgastraums (10) der Zuströmkanal (22) über das Luftstromsteuerelement (51) wahlweise mit einem Abluftkanal (11) des Fahrgastraums (10) verbindbar ist.

5. Einrichtung nach einem der Ansprüche 1 bis 4,
dadurch gekennzeichnet, daß der Abströmkanal (23) und der Zuströmkanal (22) über einen Wärmetauscher (24) insbesondere Kreuzstromwärmetauscher in wärmeaustauschender Verbindung stehen.

6. Einrichtung nach einem der Ansprüche 1 bis 5,
dadurch gekennzeichnet, daß der den Luftstrom befeuchtende Verdunster (25) ein regelbares Wasserzulaufventil aufweist.

7. Einrichtung nach einem der vorhergehenden Ansprüche, dadurch gekennzeichnet, daß die Wärmequelle (18) eine Heizvorrichtung wie ein elektrisches Heizregister oder ein von einem Heizluftstrom durchströmter Wärmetauscher ist, wobei der Heizluftstrom vorteilhaft ein Abwärmeluftstrom ist.

8. Einrichtung nach einem der vorhergehenden Ansprüche, dadurch gekennzeichnet, daß zum Heizen des Fahrgastraums (10) der Abströmkanal (23) über das Luftstromsteuerelement (50) und der Zuströmkanal (22) wahlweise mit einem Umluftkanal (38) verbindbar ist.

9. Verfahren zum Kühlen einer Kabine mit einer Einrichtung nach einem der Ansprüche 1 bis 8,
dadurch gekennzeichnet, daß mittels des Umluftgebläses (19) ein Luftstrom über den Zuströmkanal (22) der Wärmequelle (18, 40) und anschließend der Reaktionskammer (21) zugeführt wird und daß die aus dem Abströmkanal 23 austretende entfeuchtete Luft nach Austritt aus dem eine Kühlung des Luftstroms bewirkenden Wärmetauschers (27) in dem Verdunster (13) des Zuluftkanals (12) durch Verdunsten von Wasser bis zur Kühlgrenze adiabatisch abgekühlt und unmittelbar in die Kabine (10) eingeleitet wird.

10. Verfahren nach Anspruch 9,
dadurch gekennzeichnet, daß der durch den Abluftkanal (11) geführte Abluftstrom in dem Wärmetauscher (24) durch den aus der Reaktionskammer (21) austretenden trockenen Warmluftstrom erwärmt wird und dann der Reaktionskammer (21) zugeführt wird.

11. Verfahren nach Anspruch 10,
dadurch gekennzeichnet, daß der Abluftstrom vor Eintritt in die Reaktionskammer (21) bis an die Sättigungsgrenze befeuchtet wird.

12. Verfahren zum Heizen einer Kabine mit einer Einrichtung nach einem der Ansprüche 1 bis 8,
dadurch gekennzeichnet, daß mittels des Umluftgebläses (19) ein Luftstrom erzeugt wird, der zunächst in dem Verdunster (25) mit Feuchtigkeit angereichert und über den Zuströmkanal (22) der Reaktionskammer (21) zugeführt wird, der Luftstrom unter Aufnahme von Wärme im Sorptionsreaktor entfeuchtet und in dem Wärmetauscher (27) durch einen Kühlluftstrom (28) gekühlt wird, wobei der Kühlluftstrom (28) dem Fahrgastraum (10) als Heizluftstrom zugeführt wird.

13. Verfahren nach Anspruch 12,
dadurch gekennzeichnet, daß der Kühlluftstrom (28) aus abgezogener Kabinenluft und einem Anteil Frischluft zusammengesetzt wird.

14. Verfahren nach Anspruch 12,
dadurch gekennzeichnet, daß über den Abluftkanal (11) abgezogene Kabinenluft als feuchter Luftstrom zugeführt wird, wobei die Kabinenluft vorzugsweise in dem Verdunster (13) insbesondere bis zur Sättigungsgrenze befeuchtet und über den Zuluftkanal (12) abgezogen wird.

15. Verfahren nach einem der Ansprüche 9 bis 14,
dadurch gekennzeichnet, daß zur Desorption des Sorptionsreaktors (20) die Durchströmungsrichtung der Reaktionskammer (21) umgekehrt wird.

## Claims

1. Device for the intermittent heating or cooling of the passenger compartment (10) of an automotive vehicle with a heat source (18, 40), the heat energy of which may be transferred by means of an air circulation fan (19) and which has the following features:
- a sorption reactor is connected in the air flow downstream of the heat source (18, 40) with zeolite or the like as the sorbent;
- a fresh air duct (8) may be connected to the inflow duct (22, 23) which is between the air circulation fan (19) and the reaction chamber (21) of the sorption reactor (20), by means of a first air flow control element (51);
- an outflow air duct (9) may be connected to the exhaust flow duct (22, 23) of the reaction chamber (21) of the sorption reactor (20) by means of a second air flow control element (50, 57), which outflow air duct opens out into the atmosphere;
- an air-humidifying evaporator (13, 25) may be connected upstream of the sorption reactor (20) in the air flow thereof;
- the heat exchanger (27) which is connected on the one hand to a cooling air fan (6, 29) is installed, on the other hand, next to the sorption reactor (20) in the air flow thereof;
- the heat exchanger (27) which is connected on the one hand to the cooling air fan (6, 29) is in connection with the passenger compartment (10) via a connection duct (30) which conducts the air flow which is generated by the cooling fan.

2. Device according to Claim 1, characterised in that an outflow air duct (31), which may be subjected to an air flow by means of a further air flow control element (52), is provided to remove heat.

3. Device according to Claim 1, characterised in that to cool the passenger compartment (10) the exhaust duct (23) may be connected, selectively, via the air flow control element (50), to an air supply duct (12) in which an evaporator (13) is disposed.

4. Device according to any one of the preceding Claims, characterised in that, to cool the passenger compartment (10), the inflow duct (22) may be connected, selectively, via the air flow control element (51), to an exhaust duct (11) of the passenger compartment (10).

5. Device according to any one of Claims 1 to 4, characterised in that the exhaust flow duct (23) and the inflow duct (22) are in heat-exchanging connection via a heat exchanger (24), in particular a crossflow heat exchanger.

6. Device according to any one of Claims 1 to 5, characterised in that the evaporator (25), which humidifies the air flow, includes an adjustable water supply valve.

7. Device according to any one of the preceding Claims, characterised in that the heat source (18) is a heating device such as an electrical radiator or a heat exchanger which is flowed through by a heating air flow, wherein the heating air flow is, advantageously, a waste heat air flow.

8. Device according to any one of the preceding Claims, characterised in that to heat the passenger compartment (10), the exhaust duct (23) may be connected, selectively, via the air flow control element (50) and the inflow duct (22) to an air circulation duct (38).

9. Process for cooling a compartment with a device according to any one of Claims 1 to 8, characterised in that, by means of the air circulation fan (19), an air flow is conducted via the inflow duct (22) to the heat source (18, 40) and, subsequently, to the reaction chamber (21); and in that the dehumidified air, which passes out of the exhaust duct (23), is, after exiting from the heat exchanger (27) which performs a cooling of the air flow, adiabatically cooled in the evaporator (13) of the inflow duct (12) by means of evaporation of the water to the cooling limit, and is then conducted directly into the compartment (10).

10. Process according to Claim 9, characterised in that the exhaust air flow which is conducted by means of the exhaust air duct (11) is heated in the heat exchanger (24) by means of the dry warm air flow which exits from the reaction chamber (21) and is then conducted to the reaction chamber (21).

11. Process according to Claim 10, characterised in that the exhaust air flow is humidified to saturation point prior to entry into the reaction chamber (21).

12. Process for heating a compartment with a device according to any one of Claims 1 to 8, characterised in that an air flow is generated by means of the air circulation fan (19), which air flow first has moisture added to it in the evaporator (25) and is conducted via the inflow duct (22) to the reaction chamber (21), the air being dehumidified in the sorption reactor, with the absorption of heat, and is cooled in the heat exchanger (27) by means of a cooling air flow (28), wherein the cooling air flow (28) is conducted to the passenger compartment (10) as a heating air flow.

13. Process according to Claim 12, characterised in that the cooling air flow (28) consists of compartment air which is drawn off, and a part of fresh air.

14. Process according to Claim 12, characterised in that compartment air which is drawn off via the exhaust duct (11) is supplied in the form of a humid air flow, wherein the compartment air is advantageously humidified, in particular to saturation point, in the evaporator and drawn off via the air supply duct (12).

15. Process according to any one of Claims 9 to 14, characterised in that, for desorption of the sorption reactor (20), the throughflow direction of the reaction chamber (21) is reversed.

## Revendications

1. Dispositif pour chauffer ou refroidir par intervalles l'habitacle (10) d'un véhicule automobile, comportant une source de chauffage (18, 40), dont l'énergie thermique peut être transmise à un courant d'air produit par un ventilateur de circulation (19), et comportant les caractéristiques suivantes :
- un réacteur à sorption contenant la zéolite ou analogue en tant qu'agent de sorption et monté en aval de la source de chaleur (18, 40) dans le courant d'air ;
- un canal de circulation d'air frais (19) peut être raccordé au canal d'alimentation (22, 23) entre le ventilateur de circulation d'air (19) et la chambre de réaction (21) du réacteur à sorption (20), au moyen d'un premier élément (51) de commande du courant d'air ;
- un canal d'air d'échappement (9), qui débouche dans l'atmosphère, peut être raccordé au canal de sortie (22, 23) de la chambre de réaction (21) du réacteur à sorption (20), par un second élément (50, 57) de commande du courant d'air ;
- un évaporateur (13, 15) humidifiant l'air peut être monté en amont du réacteur à sorption (20), dans le courant d'air de ce réacteur ;
- un échangeur de chaleur (27), qui d'une part est relié au ventilateur d'air de refroidissement (6, 29), est inséré d'autre part, à côté du réacteur à sorption (20), dans le courant d'air de ce dernier ;
- l'échangeur de chaleur (27), qui d'une part est relié à au ventilateur d'air de refroidissement (6, 29), est raccordé à l'habitacle (10) par l'intermédiaire d'un canal de liaison (30) qui guide le courant d'air produit par le ventilateur de refroidissement.

2. Dispositif selon la revendication 1, caractérisé en ce que pour l'évacuation de la chaleur, il est prévu un canal d'air d'échappement (31), qui est chargé par un courant d'air au moyen d'un autre élément (5) de commande du courant d'air.

3. Dispositif selon la revendication 1, caractérisé en ce que pour le refroidissement de l'habitacle (10), le canal de sortie (23) peut être raccordé au choix, par l'intermédiaire de l'élément (50) de commande du courant d'air, à un canal d'amenée d'air (12), dans lequel est disposé un évaporateur (13).

4. Dispositif selon l'une des revendications précédentes, caractérisé en ce que pour le refroidissement de l'habitacle (10), le canal d'alimentation (22) peut être raccordé au choix, par l'intermédiaire de l'élément (51) de commande du courant d'air, à un canal d'évacuation d'air (11) de l'habitacle (10).

5. Dispositif selon l'une des revendications 1 à 4, caractérisé en ce que le canal de sortie (23) et le canal d'alimentation (22) sont reliés, selon une liaison d'échange thermique, par l'intermédiaire d'un échangeur de chaleur (24), notamment d'un échangeur de chaleur à écoulements croisés.

6. Dispositif selon l'une des revendications 1 à 5, caractérisé en ce que l'évaporateur (25), qui humidifie le courant d'air, comporte une soupape réglable d'amenée d'eau.

7. Dispositif selon l'une des revendications précédentes, caractérisé en ce que la source de chaleur (18) possède un dispositif de chauffage tel qu'un registre électrique de chauffage ou un échangeur de chaleur parcouru par un courant d'air chaud, le courant d'air chaud étant avantageusement un courant d'air évacuant la chaleur perdue.

8. Dispositif selon l'une des revendications précédentes, caractérisé en ce que pour chauffer l'habitacle (10), le canal de sortie (23) peut être raccordé au choix à un canal de circulation d'air (38) par l'intermédiaire de l'élément (50) de commande du courant d'air et du canal d'alimentation (22).

9. Procédé pour refroidir une cabine comportant un dispositif selon l'une des revendications 1 à 8, caractérisé en ce qu'un courant d'air est envoyé au moyen du ventilateur de circulation d'air (19), par l'intermédiaire du canal d'alimentation (22) à la source de chaleur (18, 40) et ensuite à la chambre de réaction (21), et que l'air humidifié, qui sort du canal de sortie (23), est refroidi de façon adiabatique, lorsqu'il sort de l'échangeur de chaleur (27) qui réalise un refroidissement du courant d'air, dans l'évaporateur (13) du canal d'arrivée d'air (12) par évaporation de l'eau jusqu'à la limite de refroidissement, et est introduit immédiatement dans la cabine (10).

10. Procédé selon la revendication 9, caractérisé en ce que le courant d'air sortant, qui est délivré par le canal d'évacuation d'air (11), est chauffé dans l'échangeur de chaleur (24) par le courant d'air chaud sec sortant de la chambre de réaction (21), et est envoyé ensuite à cette chambre de réaction (21).

11. Procédé selon la revendication 10, caractérisé en ce que le courant d'air sortant est humidifié jusqu'à la limite de saturation, avant son entrée dans la chambre de réaction (21).

12. Procédé pour chauffer une cabine comportant un dispositif selon l'une des revendications 1 à 8, caractérisé en ce qu'au moyen du ventilateur de circulation d'air (19) est produit un courant d'air qui est tout d'abord enrichi d'humidité dans l'évaporateur (25) et est renvoyé par l'intermédiaire du canal d'alimentation (22) à la chambre de réaction (21), que le courant est déshumidifié moyennant l'absorption d'une chaleur dans le réacteur à sorption et est refroidi dans l'échangeur de chaleur (27) par un courant d'air froid (28), le courant (28) d'air de refroidissement étant envoyé à l'habitacle (10) en tant que courant d'air chaud.

13. Procédé selon la revendication 12, caractérisé en ce que le courant d'air froid (28) se compose de l'air prélevé de la cabine et d'une partie d'air frais.

14. Procédé selon la revendication 12, caractérisé en ce que l'air de la cabine prélevé par l'intermédiaire du canal d'évacuation d'air (11) est envoyé comme courant d'air humide, l'air de la cabine étant humidifié de préférence dans l'évaporateur (13), notamment jusqu'à la limite de saturation et étant prélevé au moyen du canal d'amenée d'air (12).

15. Procédé selon l'une des revendications 9 à 14, caractérisé en ce que pour la désorption du réacteur à sorption (20), on inverse la direction d'écoulement dans la chambre de réaction (21).
